# EUROPÄISCHE PATENTSCHRIFT

(11) **EP 0 916 628 B1**
(45) Veröffentlichungstag und Bekanntmachung des Hinweises auf die Patenterteilung: **11.02.2004**
(21) Anmeldenummer: 98121735.9
(22) Anmeldetag: 14.11.1998
(51) Int. Cl.: C04B 28/14, C04B 18/16, C04B 11/26

(54) **Verfahren zur Herstellung eines Putzmörtels auf Basis von Gips**
A method of producing stucco mortar on the basis of gypsum
Procédé de fabrication de mortier d'enduit à base de plâtre

(30) Priorität: 18.11.1997 DE 19750997
(43) Veröffentlichungstag der Anmeldung: 19.05.1999
(73) Patentinhaber: Rigips GmbH, D-40549 Düsseldorf (DE)
(72) Erfinder: Gode, Michael, 31675 Buckeburg (DE); Hellmuth, Erich, 37619 Hehlen (DE); Koelmann, Wolfgang Dr., 37619 Bodenwerder (DE); Spickermann, Winfried Dr., 37619 Bodenwerder (DE)
(74) Vertreter: COHAUSZ & FLORACK

(56) Entgegenhaltungen:
- DE-C- 19 708 907
- DATABASE WPI Section PQ, Week 9904 Derwent Publications Ltd., London, GB; Class P43, AN 99-039006 XP002098216 & JP 10 296224 A (KENZAI TECHNO KENKYUSHO KK), 10. November 1998
- PATENT ABSTRACTS OF JAPAN vol. 097, no. 010, 31. Oktober 1997 & JP 09 165244 A (CHICHIBU ONODA CEMENT CORP), 24. Juni 1997
- PATENT ABSTRACTS OF JAPAN vol. 098, no. 006, 30. April 1998 & JP 10 045442 A (CHICHIBU ONODA CEMENT CORP), 17. Februar 1998
- PATENT ABSTRACTS OF JAPAN vol. 098, no. 006, 30. April 1998 & JP 10 036149 A (CHICHIBU ONODA CEMENT CORP), 10. Februar 1998

## Beschreibung

Die Erfindung betrifft ein Verfahren zur Herstellung eines Putzmörtels oder einer trockenen Putzmörtelmischung auf der Basis von Stuckgips oder Mehrphasengips und üblichen Mörtelzusätzen.

Bei der Herstellung von Gipskartonplatten und Gipsfaserplatten fallen erhebliche Mengen an Abfällen an. Es ist bekannt, diese Abfälle aufzubereiten und als Rohstoff für die Produktion derselben wiederzuverwenden.

Bisher bestand das Vorurteil, daß derartige Gipsbauteilabfälle für die Produktion von Putzmörteln wegen des Fasergehalts nicht verwendbar sind. So wurde befürchtet, daß selbst geringe Faseranteile die Oberflächenbeschaffenheit des Putzes beeinträchtigen könnten. Ferner könnte es zu Zusammenballungen der Fasern im Putzmörtel kommen, was ebenfalls Unregelmäßigkeiten in der Oberflächenbeschaffenheit zur Folge hätte.

Befürchtet wurde weiterhin, daß die zum Anmachen der Mörtelmasse erforderliche Wassermenge nicht konstant sei und in großem Maße von der Menge und Beschaffenheit der verwendeten Abfälle abhängen könnte. Bedenken bestanden auch hinsichtlich negativer Auswirkungen auf die Festigkeitseigenschaften der erhärteten Putze.

Es ist bekannt, bei der Rauchgasentschwefelung anfallenden Gips (REA-Gips) zur Herstellung von Putzmörteln zu verwenden. So beschreibt beispielsweise die DE 41 07 385 C2 eine Putzmischung unter Verwendung von feinstgemahlenem calciniertem Rauchgasgips.

Der Erfindung liegt die Aufgabe zugrunde, eine Putzmörtelmischung auf der Basis von Stuckgips oder Mehrphasengips zu schaffen, die wiederaufbereitete Abfälle von Gipskarton- und/oder Gipsfaserplatten enthält und die vorgenannten Nachteile nicht aufweist. Insbesondere soll die mit der Putzmörtelmischung verputzte Oberfläche keine Unregelmäßigkeiten in der Oberflächenbeschaffenheit aufweisen und solchen auf der Basis herkömmlicher Putzmörtelmischungen gleichwertig sein. Ferner soll die zum Anmachen der Mörtelmasse erforderliche Wassermenge der zum Anmachen herkömmlicher Putze auf Gipsbasis entsprechen. Auch die Festigkeiten sollen in gleicher Höhe wie bei herkömmlichen Gipsputzen liegen. Mindestens sollen diesbezüglich die Anforderungen der Normen DIN 1168 und DIN 18550 erfüllt werden. Eine weitere Aufgabe der Erfindung besteht darin, ein geeignetes Verfahren zur Herstellung eines derartigen Putzmörtelgemischs bereit zu stellen.

Diese Aufgabe wird durch ein Verfahren nach Anspruch 1 gelöst, wobei die Teilchengröße des Abfallmaterials im Putzmörtel etwa ≤ 1mm ist.

Erfindungsgemäß ist es erstmals möglich, Gipskartonplattenabfälle und/oder Gipsfaserplattenabfälle auch zur Herstellung von Gipsputzmörteln zu verwerten. Insoweit wird durch die Erfindung eine weitere Einsatzmöglichkeit für diese Abfälle bereitgestellt.

Als Gipskartonplattenabfälle kommen Abfälle aller Arten von gipshaltigen Platten in Betracht, insbesondere Gipskarton-Bauplatten, Gipskarton-Feuerschutzplatten, imprägnierte Gipskartonbauplatten und imprägnierte Gipskarton-Feuerschutzplatten sowie Gemische von Abfällen dieser Platten.

Abfälle im Sinne der Erfindung sind vollständige gipshaltige Platten mit Fehlern, die auf die Produktion oder unsachgerechte Behandlung zurückzuführen sind, oder aber Teile solcher Platten.

Der Putzmörtel kann gemäß einer bevorzugten Ausführungsform 1 bis 30 Gew.% Gipskartonplattenabfälle oder 0,5 bis 10 Gew.% Gipsfaserplattenabfälle, jeweils auf das Gewicht des trockenen Rohgips bezogen, enthalten. Gemäß einer weiteren bevorzugten Ausführungsform kann der Putzmörtel einen Anteil von 1 bis 25 Gew.%, besonders bevorzugt 1 bis 10 Gew.%, Gipskartonplattenabfällen und 0,5 bis 5 Gew.%, besonders bevorzugt 2 bis 5 Gew.%, Gipsfaserplattenabfälle, bezogen auf den trockenen Rohgips, enthalten.

Als Putzmörtelbasis wird Stuckgips oder Mehrphasengips verwendet. Stuckgips ist ein Gips mit einem überwiegenden Anteil β-Halbhydratgips. Die verwendeten Gipse können natürlichen und/oder synthetischen Ursprungs sein. Gemäß einer bevorzugten Ausführungsform wird bei der Rauchgasentschwefelung anfallender Gips (REA-Gips) als Basis verwendet.

Überraschenderweise hat sich herausgestellt, daß bei einem erfindungsgemäß erhaltenen Putzmörtel der die zum Anmachen erforderliche Wassermenge in dem für herkömmliche Putzmörtelmischungen üblichen Bereich liegt, daß es nicht zu einem Zusammenballen der Fasern kommt, daß eine fehlerfreie Oberfläche der verputzten Fläche erzielt wird und daß keine Festigkeitseinbußen der erhärteten Putze gegenüber herkömmlichen Putzen eintreten.

Zur Herstellung des erfindungsgemäßen Putzmörtels werden die wiederaufzubereitenden Gipskartonplatten und/oder Gipsfaserplatten zerkleinert. Hierzu bieten sich bekannte Verfahren wie Schreddern und Vermahlen an. Das Zerkleinern kann so erfolgen, daß keine Teilchen mit einer Teilchengröße > 1mm mehr anfallen. Die wiederaufbereiteten Gipskartonplattenabfälle und Gipsfaserplattenabfälle liegen im erfindungsgemäß erhaltenen Putzmörtel in einer Teilchengröße von ≤ 1mm vor.

Die zerkleinerten Gipskartonplattenabfälle und/oder Gipsfaserplattenreste werden anschließend mit Rohgips vermischt. Hierzu können Rauchgasgips, synthetischer Gips und/oder Naturgips eingesetzt werden. Wenn die Gipskartonplattenabfälle oder Gipsfaserplattenabfälle noch Grobanteile einer Teilchengröße > 1mm enthalten, können diese vor dem Vermischen mit Rohgips oder aber anschließend abgetrennt werden.

Anschließend wird das Gemisch in eine mit Wasser abbindefähige Form überführt. Dazu wird das Gemisch in einem Brenner, beispielsweise einem Gipskocher oder Drehofen, auf Temperaturen von 100 bis 120°C, erwärmt bis ein mit Wasser abbindefähiger Gipsplaster erhalten wird. Das Produkt dieser Wärmebehandlung oder dieses Calciniervorgangs kann ein Mehrphasengips oder auch zum überwiegenden Teil ein β-Halbhydratgips sein. Restliche aus der Aufarbeitung von Gipskartonplatten und Gipsfaserplatten stammende Faseranteile werden bei dieser Behandlung nicht verbrannt.

Sofern die aus den zerkleinerten Gipskarton- und/oder Gipsfaserplattenabfällen stammenden Grobanteile mit einer Teilchengröße > 1mm nicht schon vor dem Vermischen mit Rohgips abgetrennt wurden, werden diese vor dem Calcinieren oder nach dem Calcinieren und gegebenenfalls Nachmahlen aus dem Gemisch entfernt. Das Abtrennen der Grobanteile kann durch übliche Trennverfahren wie Sieben, beispielsweise in einem Taumelsieb, oder Sichten erfolgen.

Das so erhaltene Gemisch kann einen Stuckgips und/oder Mehrphasengips enthalten und wird in bekannter Weise mit den üblichen und geeigneten Zusatzstoffen eines Putzmörtels vermischt, die nachfolgend beschrieben werden.

Geeignete Zusatzstoffe eines Putzmörtels sind beispielsweise Cellulosederivate wie Methylcellulose, Ethylcellulose, Propylcellulose und deren Hydroxyalkylderivate und Alkalisalze von Carboxycellulosen sowie Stärkeether als Andicker. Cellulosen können in Mengen von 0,1 bis 1,0 Gew.%, bezogen auf das Gewicht der Mörtelmischung, enthalten sein. Stärkeether können beispielsweise in einer Menge von 0,05 bis 0,5 Gew.%, bezogen auf das Gewicht der Mörtelmischung, enthalten sein.

Sogenannte Leichtzuschlagstoffe in Mengen von beispielsweise 0,5 bis 5 Gew.%, bezogen auf das Gewicht der Mörtelmischung, sind beispielsweise poriger und aufgeblähter Vermiculit, Bimsstein, Rundgranulat aus leichtporigem Glas und Perlite. Schwerzuschlagstoffe können beispielsweise Kalk, Kalkhydrat, Kalksteingries und Quarzsand sein. Die erfindungsgemäßen Putzmörtel können ferner Tenside wie Fettalkoholsulfate, insbesondere Natriumlaurylsulfat, Abbindeverzögerer, Abbindebeschleuniger, Zement und Hydrophobierungsmittel enthalten.

Im folgenden wird die Erfindung anhand eines Ausführungsbeispiels erläutert.

### Beispiel

Gipskartonplattenabfälle wurden in einer Walzenmühle geschreddert und anschließend in einer Hammermühle vermahlen. Nach diesen Verfahrensschritten wies der wiederaufbereitete Abfall folgende Korngrößenverteilung auf:

| | | |
|---|---|---|
| Siebrückstände (Gew.%) auf | 63 µm | 23,2 % |
| | 90 µm | 9,6 % |
| | 200 µm | 4,3 % |
| | 500 µm | 2,6 % |
| | 800 µm | 2,0 % |
| | 1000 µm | 2,0 % |
| | 1600 µm | 1,6 % |

Dieses Material wurde dem Rohgips in einer Menge von 10 Gew.%, bezogen auf das Gewicht des trockenen Rohgips, zugesetzt. Gegebenenfalls nach einer Vortrocknung wurde das Gemisch in einem geeigneten Brennaggregat zu Stuckgips calciniert. Nach dem Brennen erfolgte eine Nachmahlung in einer Kugelmühle. Vor der Weiterverarbeitung zu einer Putzmörtelmischung wurde die Fraktion > 1 mm durch Siebung in einem Taumelsieb abgetrennt. Die Fraktion ≤ 1mm wurde mit den üblichen Zusatzstoffen und Stellmitteln gemischt.

Beispielsweise wurde ein Haftputzmörtel nach folgender Rezeptur gefertigt:

| | |
|---|---|
| 90 Gew.% | Stuckgips (gesiebt) |
| 3 Gew.% | Leichtzuschlagstoffe, wie Perlite |
| 3 Gew.% | Zuschlagstoffe, wie Quarzsand |
| 2,5 Gew.% | Kalkhydrat |
| 1,5 Gew.% | Zusatzstoffe, wie Verdickungsmittel, Verzögerer, Netzmittel. |

Dieser Haftputz wies einen Wasserbedarf (Wasser/Feststoff-Verhältnis) von 0,79 auf. Die Verarbeitung erfolgte in einer für Handputze üblichen Weise, wobei die Verarbeitungseigenschaften als sehr gut bewertet wurden. Die fertiggestellten Putzoberflächen waren glatt und fehlerfrei. Die nach DIN 1168 und DIN 18550 geforderten Festigkeitsanforderungen wurden durch den erfindungsgemäßen Putzmörtel bei einer Biegezugfestigkeit von 1,1 N/mm² und einer Druckfestigkeit von 3,0 N/mm² erfüllt.

## Patentansprüche

1. Verfahren zur Herstellung einer trockenen Putzmörtelmischung, **dadurch gekennzeichnet, daß** man ein Gemisch aus zerkleinerten Gipskartonplatten- und/oder Gipsfaserplattenabfällen und Rohgips calciniert, Teilchen aus den zerkleinerten Gipskartonplattenabfällen und/oder Gipsfaserplattenabfällen mit einer Teilchengröße von etwa > 1mm vor der Zugabe zum Rohgips, vor oder nach dem Calcinieren aus dem Gemisch entfernt, und das Gemisch nach dem Calcinieren mit üblichen Zusatzstoffen eines Putzmörtels vermischt.

2. Verfahren nach Anspruch 1, **dadurch gekennzeichnet, daß** man, bezogen auf das Gewicht des trockenen Rohgips, 1 bis 30 Gew.% Gipskartonplattenabfälle zur Herstellung des Putzmörtels einsetzt.

3. Verfahren nach Anspruch 1, **dadurch gekennzeichnet, daß** man, bezogen auf das Gewicht des trockenen Rohgips, 0,5 bis 10 Gew.% Gipsfaserplattenabfälle zur Herstellung des Putzmörtels einsetzt.

4. Putzmörtel erhältlich nach Anspruch 1, **dadurch gekennzeichnet, daß** man, bezogen auf das Gewicht des trockenen Rohgips, Gipskartonplattenabfälle in einem Anteil von 1 bis 25 Gew.% und Gipsfaserplattenabfälle in einem Anteil von 0,5 bis 5 Gew.% einsetzt.

5. Verfahren nach Anspruch 2, **dadurch gekennzeichnet, daß** man den Anteil an wiederaufbereiteten Gipskartonplattenabfällen auf 5 bis 15 Gew.%, bezogen auf das Gewicht des trockenen Rohgips, einstellt.

6. Verfahren nach Anspruch 3, **dadurch gekennzeichnet, daß** man den Anteil an wiederaufbereiteten Gipsfaserplattenabfällen auf 2 bis 5 Gew.%, bezogen auf das Gewicht des trockenen Rohgips, einstellt.

7. Verfahren nach einem der Ansprüche 1 bis 6, **dadurch gekennzeichnet, daß** es sich bei den einzusetzenden Abfallmaterialien um Abfälle von Gipskarton-Bauplatten, Gipskarton-Feuerschutzplatten, imprägnierte Gipskartonbauplatten und/oder imprägnierte Gipskarton-Feuerschutzplatten handelt.

8. Verfahren nach Anspruch 7, **dadurch gekennzeichnet, daß** man das Gemisch nach dem Calcinieren einem Nachmahlvorgang unterzieht.

9. Verwendung der nach einem der Ansprüche 1 bis 8 erhaltenen trockenen Putzmörtelmischung mit Wasser zur Herstellung eines Putzmörtels.

## Claims

1. A method of producing a dry stucco mortar mixture, **characterized in that** a mixture made of comminuted plasterboard and/or fibrous plaster sheet wastes and crude gypsum is calcined, particles having a particle size of approximately > 1 mm are removed from the comminuted plasterboard wastes and/or fibrous plaster sheet wastes before the addition of crude gypsum, before or after the calcining, and the mixture is mixed with typical additives of a stucco mortar after the calcining.

2. The method according to claim 1, **characterized in that** 1 to 30 weight-percent plasterboard wastes, in relation to the weight of the dry crude gypsum, are used for producing the stucco mortar.

3. The method according to claim 1, **characterized in that** 0.5 to 10 weight-percent fibrous plaster sheet wastes, in relation to the weight of the dry crude gypsum, are used for producing the stucco mortar.

4. A stucco mortar obtainable according to claim 1, **characterized in that** plasterboard wastes are used in a proportion of 1 to 25 weight-percent and fibrous plaster sheet wastes are used in a proportion of 0.5 to 5 weight-percent, in relation to the weight of the dry crude gypsum.

5. The method according to claim 2, **characterized in that** the proportion of reprocessed plasterboard wastes is set to 5 to 15 weight-percent, in relation to the weight of the dry crude gypsum.

6. The method according to claim 3, **characterized in that** the proportion of reprocessed fibrous plaster sheet wastes is set to 2 to 5 weight-percent, in relation to the weight of the dry crude gypsum.

7. The method according to one of claims 1 to 6, **characterized in that** the waste materials to be used are wastes of plasterboard building slabs, plasterboard fire protection slabs, impregnated plasterboard building slabs, and/or impregnated plasterboard fire protection slabs.

8. The method according to claim 7, **characterized in that** the mixture is subjected to a subsequent milling procedure after the calcining.

9. A use of a dried stucco mortar mixture obtained according to one of claims 1 to 8 with water to produce a stucco mortar.

## Revendications

1. Procédé de préparation d'un mélange de mortier d'enduit sec, **caractérisé en ce que** l'on calcine un mélange de résidus de plaques de parement en plâtre et/ou de plaques plâtre-fibres concassés et de plâtre brut, on sépare les particules de résidus de plaques de parement en plâtre et/ou de résidus de plaques plâtre-fibres concassés avec une granulométrie > 1 mm avant l'addition du plâtre brut, avant ou après la calcination du mélange et on ajoute au mélange après la calcination, les additifs usuels d'un mortier d'enduit.

2. Procédé suivant la revendication 1, **caractérisé en ce que** l'on met en oeuvre 1 à 30% en poids de résidus de plaques de parement en plâtre pour la préparation du mortier d'enduit, sur base du poids du plâtre brut sec.

3. Procédé suivant la revendication 1, **caractérisé en ce que** l'on met en oeuvre 0,5 à 10% en poids de résidus de plaques plâtre-fibres pour la préparation du mortier d'enduit, sur base du poids du plâtre brut sec.

4. Mortier d'enduit pouvant être obtenu suivant la revendication 1, **caractérisé en ce que** l'on met en oeuvre, sur base du poids du plâtre brut sec, des résidus de plaques de parement en plâtre en une proportion de 1 à 25% en poids et des résidus de plaques plâtre-fibres en une proportion allant de 0,5 à 5% en poids.

5. Procédé suivant la revendication 2, **caractérisé en ce que** l'on ajuste la proportion de résidus de plaques de parement en plâtre recyclés de 5 à 15% en poids, sur base du poids du plâtre brut sec.

6. Procédé suivant la revendication 3, **caractérisé en ce que** l'on ajuste la proportion de résidus de plaques plâtre-fibres recyclés de 2 à 5% en poids, sur base du poids du plâtre brut sec.

7. Procédé selon l'une quelconque des revendications 1 à 6, **caractérisé en ce que** les matériaux de résidus mis en oeuvre consistent en des résidus de plaques de parement en plâtre, des plaques de parement en plâtre, protégées contre les flammes, des plaques de parement en plâtre imprégnées et des plaques de parement en plâtre, protégées contre les flammes, imprégnées, ainsi que des mélanges de résidus de ces plaques.

8. Procédé suivant la revendication 7, **caractérisé en ce que** l'on soumet le mélange après la calcination, à un processus de broyage ultérieur.

9. Utilisation du mélange de mortier d'enduit sec obtenu suivant l'une quelconque des revendications 1 à 8, avec de l'eau pour préparer un mortier d'enduit.
